# EUROPEAN PATENT APPLICATION

(11) **EP 4 804 065 A1**
(43) Date of publication of application: **09.09.2026**
(21) Application number: 25161706.4
(22) Date of filing: 04.03.2025
(51) Int. Cl.: G06F 21/57

(54) **METHOD FOR INTEGRITY VERIFICATION OF LINUX FILESYSTEM IMAGES**

(71) Applicant: Valeo Comfort and Driving Assistance, 94000 Créteil (FR)
(72) Inventor: PITCHAIMANI, Ramakrishnan, 94000 Créteil (FR); RASOAMANANA, Aina, 94000 Créteil (FR)
(74) Representative: Delaval, Guillaume Laurent

(57) **Abstract**

The invention relates to a method (Mth) for integrity verification of Linux filesystem images (Fsl) of a Linux embedded system, wherein said method (Mth) comprises:
(a) a cryptographic signing phase (Ph_S) comprising :
- generating a unique signature (Sₙ) for each Linux filesystem image (FsIₙ) of a filesystem (Fs);
- appending it to each corresponding Linux filesystem images (FsIₙ);
- adding a padding (Paₙ) to align the appended unique signatures (Sₙ) to a predetermined size or structure;
- producing signed Linux filesystem images (FsISₙ) by combining each Linux filesystem image (FsIₙ) with their respective unique signature (Sₙ), and padding (Paₙ);
-(b) a building phase (Ph_Bd) comprising :
- building an initRAMFs image (I_RAMFs) that comprises a security configuration file (fsₙ.conf) for each signed Linux filesystem images (FsISₙ), a security configuration file (fsₙ.conf) comprising a public key (PBK) or certificate (CT) and a fixed offset of location (Offₙ) for their respective signatures (Sₙ);
- building a boot Image (I_Boot) that comprises said initRAMFs image (I_RAMFs) and a Linux kernel (K);
- loading a secondary bootloader (SBL), an application bootloader (ABL), said boot-image (I_Boot), said initRAMFs image (I_RAMFs), said Linux filesystem images (FsISₙ) and said Linux filesystem images (FsISₙ) into a second memory (Mem1) of a target device (Dev) that comprises a primary bootloader (PBL);

(c) a boot up phase (Ph_Bt) comprising :
- executing said primary bootloader (PBL) so as to cryptographically verify the secondary bootloader (SBL);
- executing said secondary bootloader (SBL) so as to cryptographically verify the application bootloader (ABL);
- executing said application bootloader (ABL) so as to load the boot image (I_Boot) into a random access memory (RAM) of said target device (Dev), said boot image (I_Boot) comprising the initRAMFs image (I_RAMFs) and the Linux kernel (K);
- starting the Linux kernel (K) so as to execute the initRAMFs image (I_RAMFs), said executing comprising : verifying sequentially each of said signed Linux filesystem images (FsISₙ) and if the

signature verification is successful, mounting the Linux filesystem images (FsIₙ) into said random access memory (RAM).

## Description

### FIELD OF THE INVENTION

The present invention relates to a method for integrity verification of Linux filesystem images of a Linux operating system. Such method may be used, but not exclusively, in the software domain.

### BACKGROUND OF THE INVENTION

In the software domain, a method for integrity verification of Linux filesystem images of a Linux embedded system comprises a boot time :
- executing a primary bootloader so as to cryptographically verify a secondary bootloader,
- executing said secondary bootloader so as to cryptographically verify an application bootloader,
- executing the application bootloader so as to load the boot image into memory,
- starting the Linux kernel so as to execute the initRAMFs image, said executing comprising verifying the Linux filesystem images using secure mechanisms such as dm-verity or fs-verity or IMA/EVM.

One problem of this prior art is that all these secure mechanisms, which are built in Linux kernel, have dependency with the Linux filesystems' property. Indeed, the fs-verity mechanism and the dm-verity need Read-Only filesystems, and the IMA ("Integrity Measurement Architecture")/EVM("Extended Verification Module") mechanisms need filesystems with extended attributes. Extended attributes are a set of additional data that can be added to (i.e., extend) a file in a filesystem. The extended attribute consists of a name, which is used to refer to it, and a value. The value can be text, binary data, or another type of data. Some extended attributes supported by the Linux kernel are ext2, ext3, ext4.

Fs-verity is a support layer for the filesystems that enable them to support transparent integrity and authenticity protection of read-only files within a Linux filesystem. It is supported by the ext4, f2fs, and btrfs filesystems for Linux. Dm-verity is based on a cryptographic hash tree approach and ensures that files have not changed between reboots or during runtime. IMA/EVM detects if files have been altered (accidentally or maliciously), both remotely and/or locally. To this end, it detects offline tampering of the security extended attributes of Linux filesystems (on Linux filesystems which support extended attributes like ext3, ext4. etc.).

Hence, if one needs to add a file in a Linux filesystem that is not read-only, for example a read-write filesystem file or a write filesystem file, the fs-verify mechanism or dm-verity mechanism can't be used. It is the same for the IMA/EVM mechanism that has other dependency constraints, for example a f2fs attribute or a btrfs attribute.

It is an object of the invention to provide a method for integrity verification of Linux filesystem images of a Linux embedded system, which resolves the problem above-stated.

### SUMMARY OF THE INVENTION

To this end, it is provided a method of the invention for integrity verification of Linux filesystem images of a Linux embedded system that is defined according to claim 1.

As we will see in detail, this method proposes a filesystem agnostic integrity verification for Linux filesystems, that is to say the integrity verification is independent from the constraints of the filesystems. It ensures compatibility across different filesystems by avoiding dependency on specific filesystems features, that is to say, it applies on any filesystem regardless of the attributes Read only or Read write for example of its files. Moreover, in methods such as dm-verity/fs-verity/ IMA/EVM, the entire filesystem image is not verified before mounting, whereas in the method of the invention, the full sense of security is achieved only when entire content is verified before mounting. For example, in dm-verity, one reads a block of data and verifies it on the fly during the read, and one mounts the block of data that was read and verified, while the next block of data is yet to read. In fs-verity, one reads a block of data, mounts it and verifies it. During mount, both IMA and EVM mainly focus on files that are being accessed (either read or executed) rather than verifying every file in the system at the time of mounting. After mount, at file access (e.g. during reading or executing a file), in IMA, one computes the hash of the file content and verifies its integrity against a stored hash in the extended attribute of the same file, while in EVM, one verifies the cryptographic signature of the file's extended attribute to ensure it hasn't been tampered with.

Non-limitative embodiments of the method of the invention are defined in the dependent claims 2 to 9.

It is also provided a building device of the invention that is defined in claim 10.

It is also provided a target device of the invention that is defined in claim 11.

Non-limitative embodiments of the target device of the invention are defined in the dependent claims 12 to 14.

### BRIEF DESCRIPTION OF THE DRAWINGS

Some embodiments of methods and/or system in accordance with embodiments of the present invention are now described, by way of example only, and with reference to the accompanying drawings, in which:
Figure 1 is a schematic diagram of a non-limitative embodiment of a method for integrity verification of Linux filesystem images of a Linux operating system, according to the invention, said method comprising a cryptographic signing phase,
Figure 2 illustrates further following steps of the method of figure 1, said method further comprising a building phase,
Figure 3 illustrates further following steps of the method of figure 2, said method further comprising a boot up phase,
Figure 4a illustrates schematically a signing device, a building device, and a target device according to a first non-limitative embodiment, that are configured to carry out respectively the signing phase, the building phase, and the boot up phase of the method of figures 1 to 3.
Figure 4b illustrates schematically a signing device, a building device, and a target device according to a first non-limitative embodiment, that are configured to carry out respectively the signing phase, the building phase, and the boot up phase of the method of figures 1 to 3.

### DESCRIPTION OF EMBODIMENTS OF THE INVENTION

In the following description, well-known functions or constructions by the person skilled in the art are not described in detail since they would obscure the invention in unnecessary detail.

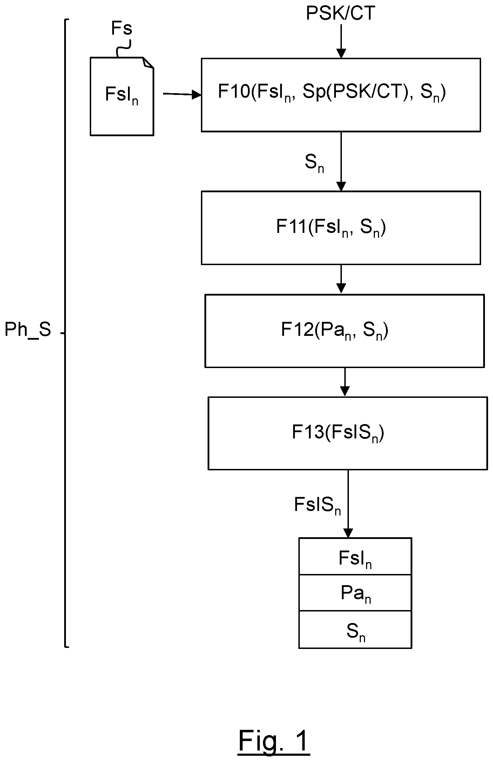

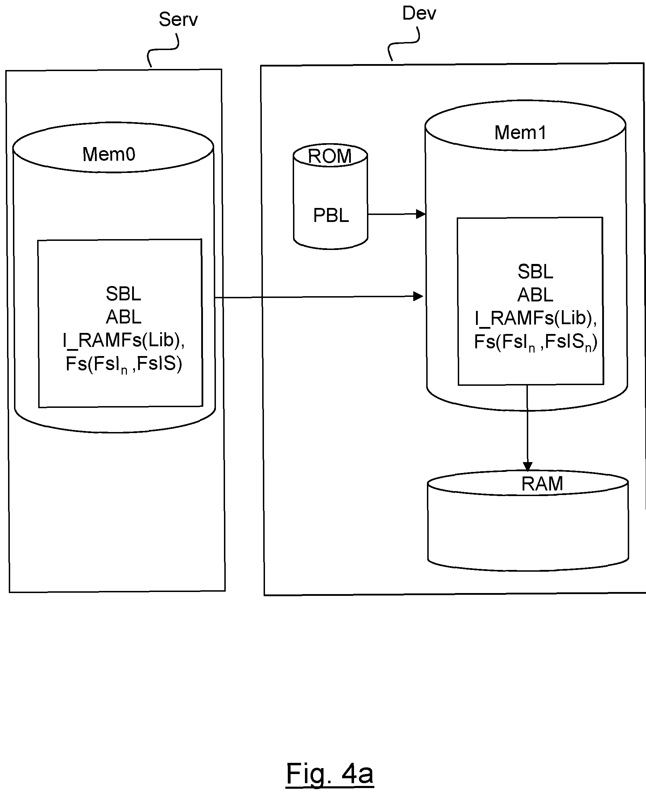

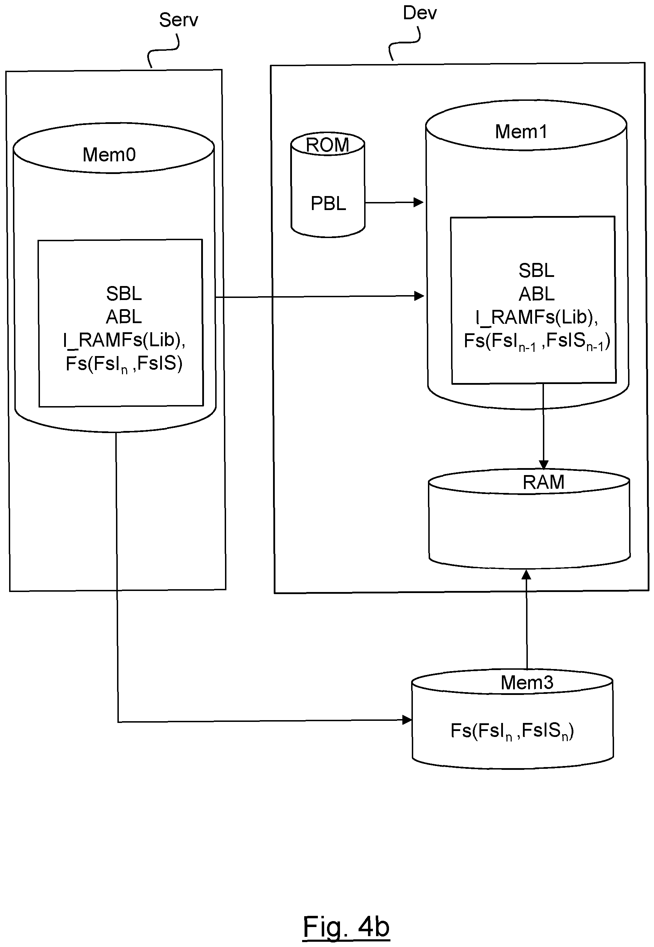

The present invention relates to a method Mth for integrity verification of Linux filesystem images Fsl of a Linux embedded system, said Mth being illustrated in figures 1 to 3. Some steps of the method Mth is carried out by a building device Serv illustrated in figures 4a and 4b.

The building device Serv is configured to load data (described in the following) into a target device Dev.

In non-limitative embodiment, the building device Serv is a server.

As illustrated in figures 4a and 4b, the building device Serv comprises a first memory Mem0 that will hold a boot image I_Boot, an initRAMfs image I_RAMFs, and secure configuration files fsₙ.conf described later in the following. In a non-limitative embodiment, the first memory Mem0 is a hard disk. The first memory Mem0 is also called internal first memory Mem0 or called internal first storage Mem0.

The target device Dev is a standalone system that embeds the Linux embedded system. In non-limitative embodiments, the target device Dev is any embedded system based in Linux, such as an electronic control unit, or a sensor or an actuator. In a non-limitative embodiment, the target device Dev is embedded in a vehicle. It is hence a target device of a vehicle. In a non-limitative example, it is a telematics control unit referred to as a TCU.

As illustrated in figures 4a and 4b, the target device Dev comprises a Read Only Memory referred to as ROM, a second memory Mem1 and a Random Access Memory referred to as RAM. In non-limitative examples, it is a DRAM, SRAM etc. In a non-limitative embodiment, the second memory Mem1 is a flash memory. In the following, the flash memory is taken as a non-limitative example.

The aim is to embed the Linux-based embedded system image in the target device Dev and to verify within said target device Dev the integrity of filesystem images Fsl of a filesystem Fs of the Linux embedded system.

To do so, a primary bootloader PBL, a secondary bootloader SBL, and an application bootloader ABL are used. In a non-limitative embodiment, the primary bootloader PBL is stored in a ROM (Read Only Memory) of the target device Dev. The secondary bootloader SBL, and the application bootloader ABL are stored initially in the first memory Mem0 of the building device Serv. The primary bootloader PBL, the secondary bootloader SBL and the application bootloader ABL are assembly code.

The Linux embedded system is split by the building device Serv into a plurality of filesystems Fs, each filesystem being represented by an image called filesystem image Fsl or Linux filesystem images Fsl. So, there are n (with n=1 to N, with N integer) of Linux filesystem images FsIₙ. This phase called split content being known by the man skilled in the art, it is not described here.

A filesystem Fs is a method and data structure that an operating system uses to manage and store data on a storage device. A filesystem Fs comprises one or a plurality of directories and files. A filesystem image Fsl refers to a binary representation or "snapshot" of data, often containing the contents of an entire filesystem or storage medium. It encapsulates all the data and structure of a filesystem Fs or disk for portability or duplication.

As described in the following, once the filesystems Fs are created, during the building of the Linux embedded system, the filesystem images FsIₙ of the filesystems Fs are individually cryptographically signed in order to allow integrity verification. It also allows authenticity verification.

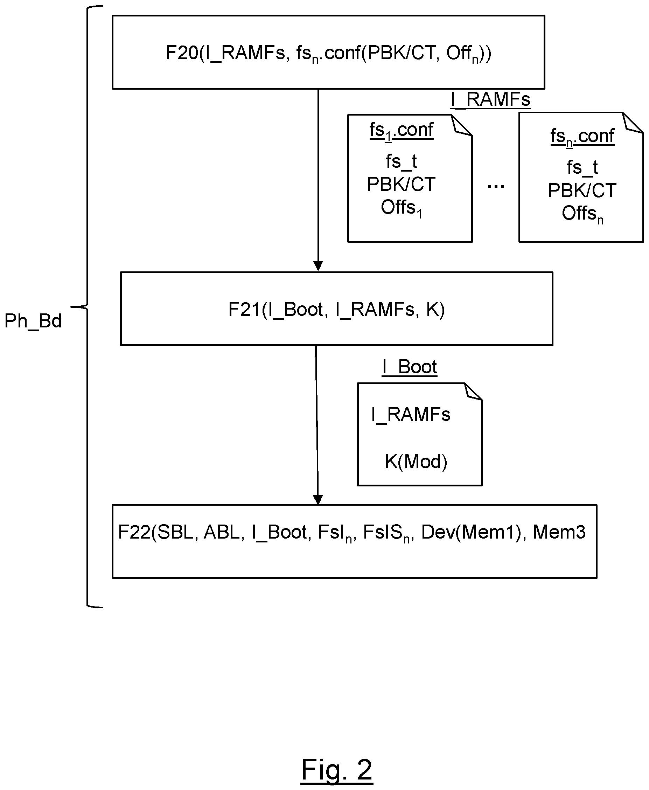

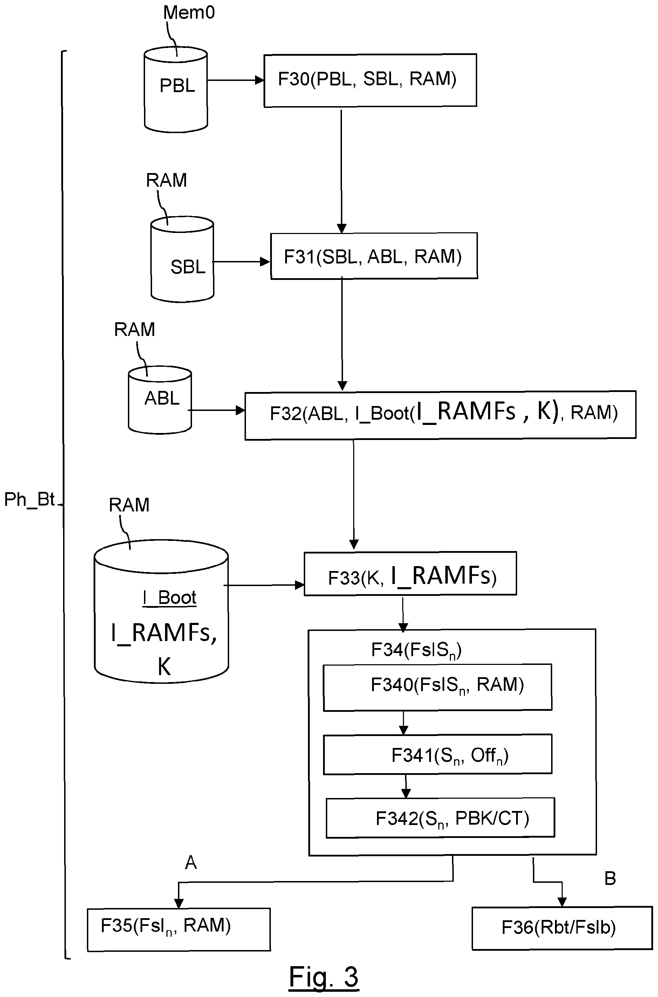

As details in the following, the Mth comprises three main phases :
- at build time :
   (a) - a cryptographic signing phase Ph_S illustrated in figure 1,
   (b) - a building phase Ph_Bd illustrated in figure 2,
- at boot time : (c) a boot up phase Ph_Bt illustrated in figure 3.

The built time is the duration it takes to compile and install the Linux Kernel. The boot time is the duration it takes for the Linux OS to complete the boot process, from the instant of power on or a restart of the system Sys until the login screen appears.

The cryptographic signing is executed by the building device Serv.

### Cryptographic signing phase Ph_S

This phase is illustrated in figure 1.

In step F10 illustrated F10(FsIₙ, Sp(PSK/CT), Sₙ), a unique signature (Sₙ) for each Linux filesystem image (FsIₙ) is generated using a cryptographic verification process Sp.

All the Linux filesystem images FsIₙ are signed.

The signing cryptographic verification process Sp utilizes an asymmetric cryptographic algorithm. In a non-limitative embodiment, the cryptographic verification process Sp utilizes a hashing algorithm and a private key PSK for generating each signature Sₙ. In another non limitative embodiment, the cryptographic verification process Sp utilizes a certificate CT.

The result is a unique signature Sₙ for each Linux filesystem image FsIₙ.

It is to be noted that the private key PSK is predefined and is paired up with a public key PBK which is also predefined. In a non-limitative embodiment, the public key PBK is preprogrammed in the first memory Mem0 of the building device Serv during the production phase. The same goes for the certificate CT which is preprogrammed in the first memory Mem0 of the building device Serv during the production phase.

As for the private key PSK, it is stored securely outside the building device Serv. In a non-limitative example, it is stored in a Hardware security module (HSM) in a company network.

In step F11 illustrated F11(FsIₙ, Sₙ), the respective unique signature Sₙ are respectively appended to each corresponding Linux filesystem image FsIₙ.

In step F12 illustrated F12(Paₙ, Sₙ), a padding Paₙ is added to align the appended unique signatures to a predetermined size or structure.

The predetermined size is the one of the signed Linux filesystem image FsIS.

The structure refers to the specific arrangement or format in which the filesystem image Fsl, its cryptographic signature S, and any added metadata (like padding Pa) are organized within the resultant signed Linux filesystem image FsIS. This structure ensures that the signed Linux filesystem image FsIS adheres to a predictable, interpretable, and compatible layout for subsequent processes such as verification or usage.

In a non-limitative embodiment, the padding Pa is configured to align the signed Linux filesystem images FsISₙ to a storage block boundary compatible with a storage medium. In a non-limitative example, the storage block boundary is 2kbytes. In non-limitative embodiments, the storage medium is the internal first memory Mem0 of the building device Serv or a separate storage medium Mem3 described later, this later being therefore external to the building device Serv. Indeed, generally in the internal first memory Mem0, the whole memory is organized as storage blocks, of 2kbytes, 4kbytes or 8kbytes. Padding everything according to a storage block boundary which depends on the block size is easier to access. The same goes for a separate storage medium Mem3. Moreover, it also permits to accommodate potential future size growth.

In step F13 illustrated F13(FsISₙ), signed Linux filesystem images FsISₙ are produced by combining each Linux filesystem image FsIₙ with their respective unique signature Sₙ and padding Paₙ.

### Building phase Ph Bd

This phase is illustrated in figure 2. It is also performed by the building device Serv.

In step F20 illustrated F20(I_RAMFs, fsₙ.conf(PBK/CT, Offₙ)), an initRAMFs image I_RAMFs that comprises a security configuration file fsₙ.conf for each signed Linux filesystem images FsISₙ is built. It is to be noted that each security configuration file has a unique name so as to recognize it.

It is to be noted that the initRAMFs image I_RAMFs is aware of the number of filesystems images Fsl which is preprogrammed.

A security configuration file fsₙ.conf comprises :
- a Linux filesystem type Fs_t : Read-Only, Read-Write,
- the public key PBK or certificate CT used for cryptographic signing the signed Linux filesystem images FsISₙ, and
- a fixed offset of location Offₙ for their respective signatures Sₙ.

Hence, for each signed Linux filesystem image FsISₙ, there is a corresponding triple fixed offset of location Offₙ- signatures Sₙ- public key PBK/certificate CT.

The fixed offset of location Offₙ refers to the start address of a signature Sₙ within the initRAMFs image I_RAMFs when it is loaded into a random access memory of the target device Dev.

In not-limitative embodiment, the fixed offset location Offₙ of each signature Sₙ is aligned to a storage block boundary for optimized access during the signature verification. Indeed, Generally in the first memory Mem0, the whole memory is organized as storage blocks, of 2kbytes, 4kbytes or 8kbytes. Storing everything in a same block size is easier to access. The same goes for a separate storage medium Mem3.

It is to be noted that the initRAMFs image I_RAMFs includes the necessary cryptographic library Lib (illustrated in figures 4a and 4b) so as to verify the signature Sₙ of each filesystem image FsIₙ.

Moreover, in a non-limitative embodiment, the initRAMFs image I_RAMFs further comprises metadata describing the structure or version of the signed filesystem images FsISₙ. The version defines the structure. The type Fs_t of the filesystem Fs is used during the mounting process. The mounting depends on this type. The same goes for the structure or version.

In a non-limitative embodiment, the initRAMFs image I_RAMFs includes a fallback mechanism to load an alternative Linux filesystem image Fslb in the event of a signature verification failure.

In step F21 illustrated F21(I_Boot, I_RAMFs, K), a boot image I_Boot is built. It comprises the initRAMFs image I_RAMFs and the Linux Kernel.

In step F22 illustrated F22(SBL, ABL, I_Boot, FsIₙ, FsISₙ, Dev(Mem1), Mem3), the secondary bootloader SBL, the application bootloader ABL, the boot image I_Boot along with all the filesystem images FsIₙ and signed filesystem images FsISₙ are then flashed in a virgin target device Dev that only comprises a primary bootloader PBL. Depending on the size of the target device Dev, all are flashed into the second flash memory Mem1 of the target device Dev, or part of them are also flashed into a separate storage medium Mem3. In a non-limitative embodiment, the separate storage medium Mem3 is an Embedded multimedia card referred to as EMMC.

### Boot up phase Ph Bt.

The boot-up phase Ph_Bt is performed by the target device Dev. The boot-up phase Ph_Bt is performed after the target device Dev is powered on or reset.

In target devices where resources are limited and performance is critical, a bootloader is often split into two stages: a primary bootloader PBL and a secondary bootloader SBL.

In step F30 illustrated F30(PBL, SBL, RAM), the primary bootloader PBL is executed so as to cryptographically verify a secondary bootloader SBL. When the primary PBL is executed, it loads the secondary bootloader SBL into the RAM from the second memory Mem1, and then it verifies the integrity using some checksum or signature algorithm known by the man skilled in the art.

The PBL is responsible to initialize the minimum hardware required to load in RAM and execute the SBL.

In step F31 illustrated F31(SBL, ABL, RAM), the secondary bootloader SBL is executed so as to cryptographically verify the application bootloader ABL. When the secondary SBL is executed, it loads the application bootloader ABL into the RAM from the second memory Mem1, and then it verifies the integrity and authenticity of the application bootloader ABL, decrypts and decompresses it if needed. Such cryptographic verification being known by the man skilled in the art, it is not described here.

In step F32 illustrated F32(ABL, I_Boot(I_RAMFs, K), RAM), the application bootloader ABL is executed so as to load the boot image I_Boot into the RAM from the second flash memory Mem1.

In a non-limitative embodiment, the Linux kernel K in the boot image I_Boot includes additional modules Mod to facilitate secure signature verification of the signed Linux filesystem images FsISₙ. In a non-limitative embodiment, these additional modules Mod are cryptographic modules such as Linux Kernel Crypto API, Openssl etc. in non-limitative examples.

In step F33 illustrated F33(K, I_RAMFs), the Linux kernel K starts so as to execute the initRAMFs image I_RAMFs.

Hence, at boot time, the application bootloader ABL loads the Linux kernel K and the initRAMFs image _RAMFs into the RAM and starts the Linux kernel. The Linux kernel checks for the presence of the initRAMFs image I_RAMFs and, if found, mounts it into the RAM.

The initRAMFs image I_RAMFs is loaded from the second flash memory Mem1 of the target device Dev as illustrated in figure 4a according to a first non-limitative embodiment, or partly from it and partly from it and partly from the separate storage medium Mem3 as illustrated in figure 4b according to a second non-limitative embodiment.

The Linux kernel K is responsible for initializing the rest of the Linux embedded system .

The initRAMFs image I_RAMFs is responsible for mounting the root filesystem of the system Sys. It is a complete set of directories which are found on the root filesystem.

When the initRAMFs image I_RAMFs is executed, the following steps are executed.

In step F34 illustrated F34(FsISₙ), each signed Linux filesystem image FsISₙ of the Linux filesystems Fs is verified.

The signature verification comprises the following steps.

In step F340 illustrated F340(FsISₙ, RAM), the initRAMFs image I_RAMFs loads each of the signed Linux filesystem images FsISₙ into the RAM. Hence, it knows the address location in the RAM of each signed Linux filesystem image FsISₙ.

In step F341 illustrated F341(Sₙ, Offₙ), each signature Sₙ for each Linux filesystem image FsIₙ is extracted based on its fixed offset of location Offₙ.

Hence, the initRAMFs image I_RAMFs retrieves a signature S from the RAM which is at the end of the corresponding signed Linux filesystem Image FsIS, with the help of its corresponding fixed offset location Off which constitutes the start address of the signature S in the RAM. Hence, for each Linux filesystem image FsIₙ, the initRAMFs image I_RAMFs parsed its signature Sₙ based on the fixed offset location Offₙ.

Hence, for each signed Linux filesystem image FsISₙ, the initRAMFs image I_RAMFs looks for the corresponding fixed offset location Offₙ and the corresponding public key PBK or certificate CT in the corresponding security configuration file fsₙ.conf.

In step F342 illustrated F342(FsISₙ, PBK/CT), each signature Sₙ is validated against the public key PBK that is paired up with the private key PSK used for the cryptographic signing or against the certificate CT used for the cryptographic signing.

If the signature verification is successful (branch A illustrated in figure 3), in step F35 illustrated F35(FsIₙ, RAM), the Linux filesystem images FsIₙ are mounted into the RAM of the target device Dev from its second flash memory Mem1, or from it and from the separated storage medium Mem3. In Linux, the mounting process refers to the action of making a storage device, partition, or filesystem Fs accessible by attaching it to a system's directory tree. When a filesystem Fs is mounted, you can access the files and directories stored on it through a specific directory. During the mounting, specifying whether a filesystem Fs is mounted as read-only (RO) or read-write (RW) determines how the operating system (not illustrated) in the target device Dev interacts with the filesystem Fs.

If the signature verification fails (branch B illustrated in figure 3), in step F36 illustrated F36(Rbt/Fslb), the target device Dev is reboot Rbt if at least one signing verification for one the filesystem image failed ; there won't be any mounting, or the alternative Linux filesystem image Fslb (if it exists) is loaded into the RAM and verified according to step F34 and following.

It is to be noted that even if the target device Dev comprises an internal second memory Mem1, using a separate storage medium Mem3 often remains interesting for several key reasons:
- capacity: Internal flash storage, especially in an embedded target device Dev, is often limited. A separate storage medium (such as non-limitative examples a HDD, or a SSD) provides the much larger capacity needed for user data, applications, logs, databases, and other files,
- performance: separate storage medium device, particularly SSDs, offers significantly faster read/write performance than embedded flash storage. This leads to faster boot times, quicker application loading, and improved overall system responsiveness,
- flexibility and scalability: separate storage medium allows for easy capacity upgrades. Simply add a larger separate storage medium as needed. This is much simpler and more cost-effective than redesigning the system Sys with a larger embedded flash memory.

In a non-limitative example, if the internal second flash memory Mem1 of the target device Dev is of 5Mbytes, and the whole size to be used is of 6 Mbytes with SBL, ABL, Boot image I_Boot, three filesystems images FsIₙ, with n = 1 to 3, each of 1Mbytes size, there is not enough space in the internal second flash memory Mem1 for the third filesystem image FsIₙ. So, the third filesystem image FsIₙ can be stored in a separate storage medium device Mem3 as illustrated in figure 4b.

It is to be understood that the present invention is not limited to the aforementioned application, embodiments and variations and modifications may be made without departing from the scope of the invention. All statements herein reciting principles, aspects, and embodiments of the invention, as well as specific examples thereof, are intended to encompass equivalents thereof. Hence, in another non-limitative embodiment, the cryptographic signing phase Ph_S is executed by a signing device separate from the building device Serv, said signing device being configured to access the private key PSK in the Hardware security module. In a non-limitative embodiment, said signing device is a server.

Hence, some embodiments of the invention may comprise one or a plurality of the following advantages:
- it provides a filesystem Fs that is not agnostic as one doesn't verify the attributes of each filesystem images Fsl of the filesystem Fs,
- it provides a secure filesystem Fs as a signature is added to each and every filesystem,
- there is no need to use the classical integrity and authenticity verification mechanisms as fs-verity, dm-verity, or IMA/EVM,
- compared to fs-verity, dm-verity, or IMA/EVM, the invention enhanced security through pre-mount verification. By verifying the integrity of the entire filesystem image before mounting, it avoids exposing potentially corrupted data to the running environment. This contrasts with dm-verity and fs-verity, which perform on-the-fly or post-mount verification, respectively, leaving a window of vulnerability where compromised blocks could be accessed. This pre-mount verification
ensures that only a fully validated filesystem image is used, thereby strengthening the overall system security.

## Claims

1. A method (Mth) for integrity verification of Linux filesystem images (Fsl) of a Linux embedded system, wherein said method (Mth) comprises:
(a) a cryptographic signing phase (Ph_S) comprising :
- generating a unique signature (Sₙ) for each Linux filesystem image (FsIₙ) of a filesystem (Fs) using a cryptographic verification process (Sp);
- appending the respective unique signatures (Sₙ) to each corresponding Linux filesystem images (FsIₙ);
- adding a padding (Paₙ) to align the appended unique signatures (Sₙ) to a predetermined size or structure;
- producing signed Linux filesystem images (FsISₙ) by combining each Linux filesystem image (FsIₙ) with their respective unique signature (Sₙ), and padding (Paₙ);
-(b) a building phase (Ph_Bd) comprising :
- building an initRAMFs image (I_RAMFs) that comprises a security configuration file (fsₙ.conf) for each signed Linux filesystem images (FsISₙ), a security configuration file (fsₙ.conf) comprising a public key (PBK) or certificate (CT) used for cryptographic signing the signed Linux filesystem images (FsISₙ) and a fixed offset of location (Offₙ) for their respective signatures (Sₙ), and
- building a boot Image (I_Boot) that comprises said initRAMFs image (I_RAMFs) and a Linux kernel (K),
- loading a secondary bootloader (SBL), an application bootloader (ABL), said boot-image (I_Boot), said initRAMFs image (I_RAMFs), said Linux filesystem images (FsISₙ) and said Linux filesystem images (FsISₙ) into a second memory (Mem1) of a target device (Dev) that comprises a primary bootloader (PBL),
(c) a boot up phase (Ph_Bt) comprising :
- executing said primary bootloader (PBL) so as to cryptographically verify the secondary bootloader (SBL),
- executing said secondary bootloader (SBL) so as to cryptographically verify the application bootloader (ABL),
- executing said application bootloader (ABL) so as to load the boot image (I_Boot) into a random access memory (RAM) of said target device (Dev), said boot image (I_Boot) comprising the initRAMFs image (I_RAMFs) and the Linux kernel (K),
- starting the Linux kernel (K) so as to execute the initRAMFs image (I_RAMFs), said executing comprising :
- verifying sequentially each of said signed Linux filesystem images (FsISₙ),
- if the signature verification is successful, mounting the Linux filesystem images (FsIₙ) into said random access memory (RAM).

2. A method (Mth) according to claim 1, wherein the initRAMFs image (I_RAMFs) includes the necessary cryptographic library (Lib) so as to verify the signature (Sₙ) of each Linux filesystem image (FsIₙ).

3. A method (Mth) according to any of the preceding claims, wherein the cryptographic verification process (Sp) utilizes a hashing algorithm and a private key (PSK) for generating each signature (Sₙ) or a certificate (CT) for generating each signature (Sₙ).

4. A method (Mth) according to any of the preceding claims, wherein the padding (Pa) is configured to align the signed Linux filesystem images (FsISₙ) to a storage block boundary compatible with a storage medium.

5. A method (Mth) according to any of the preceding claims, wherein the signature verification comprises :
- loading by said initRAMFs image (I_RAMFs) each of said signed Linux filesystem images (FsISₙ) into said random access memory (RAM),
- extracting each signature (Sₙ) based on its fixed offset of location (Offₙ),
- validating sequentially each signature (Sₙ) against a public key (PBK) that is paired up with a private key (PSK) or against said certificate (CT).

6. A method (Mth) according to any of the preceding claims, wherein the initRAMFs image (I_RAMFs) further comprises metadata describing the structure or version of the signed filesystem images (FsISₙ).

7. A method (Mth) according to any of the preceding claims, wherein the fixed offset location (Offₙ) of each signature (Sₙ) is aligned to a storage block boundary for optimized access during the signature verification.

8. A method (Mth) according to any of the preceding claims, wherein the Linux kernel (K) includes additional modules (Mod) to facilitate secure signature verification of the signed Linux filesystem images (FsISₙ).

9. A method (Mth) according to any of the preceding claims, wherein the initRAMFs image (I_RAMFs) includes a fallback mechanism to load an alternative Linux filesystem image (Fslb) in the event of a signature verification failure, and wherein the method (Mth) further comprises :
- if the verification fails, rebooting the Linux embedded system (Linux) or loading said alternative Linux filesystem image (Fslb).

10. Building device (Serv1) configured to carry out the cryptographic signing phase (Ph_Bd) and the building phase (Ph_Bd) of said method (Mth) according to any of the preceding claims.

11. Target device (Dev) configured to carry out the boot up phase (Ph_Bt) of said method (Mth) according to any of the preceding claims

12. Target device (Dev) according to the preceding claim, wherein said target device (Dev) is a standalone system that embeds the Linux embedded system (Linux).

13. Target device (Dev) according to claim 11 or claim 12, wherein said target device (Dev) is a server, or electronic control unit, or a sensor or an actuator.

14. Target device (Dev) according to claim 13, wherein said target device (Dev) is a telematics control unit of a vehicle.
